# EUROPÄISCHE PATENTSCHRIFT

(11) **EP 1 839 789 B1**
(45) Veröffentlichungstag und Bekanntmachung des Hinweises auf die Patenterteilung: **31.03.2010**
(21) Anmeldenummer: 07005346.7
(22) Anmeldetag: 15.03.2007
(51) Int. Cl.: B23D 15/00, B26F 1/12, E06B 3/66, B26D 5/02, B26D 7/26, B26D 3/06

(54) **Schneidvorrichtung zum Ausklinken eines Kunststoffbandes zur Herstellung eines rahmenförmigen Abstandhalters für Isolierglasscheiben**
Separating device for notching a plastic sheet to manufacture a frame-shaped spacer for insulation glass
Dispositif de séparation destiné à détacher une bande plastique pour la fabrication d'une entretoise en forme de cadre pour plaques de verre isolantes

(30) Priorität: 28.03.2006 DE 202006005075 U; 28.09.2006 DE 202006014938 U
(43) Veröffentlichungstag der Anmeldung: 03.10.2007
(73) Patentinhaber: Bystronic Lenhardt GmbH, 75242 Neuhausen-Hamberg (DE)
(72) Erfinder: Kammerer, Stephan, 75242 Neuhausen (DE); Schuler, Peter, 75233 Tiefenbronn (DE); Tast, Thomas, 70565 Stuttgart (DE)
(74) Vertreter: Twelmeier Mommer & Partner

(56) Entgegenhaltungen:
- US-A- 2 837 160
- US-A- 3 521 515

## Beschreibung

Die Erfindung betrifft eine Schneidvorrichtung mit den im Oberbegriff des Anspruchs 1 angegebenen Merkmalen. Eine solche Vorrichtung ist aus der US 2 837 160 zum Ausführen von Gehrungsschnitten an Rohren bekannt.

Unter dem Handelsnahmen SUPERSPACER ist ein von der Rolle zu verarbeitendes vorgefertigtes Band aus Kunststoff mit rechteckigem Querschnitt bekannt, welches zum Herstellen eines rahmenförmigen Abstandhalters für Isolierglasscheiben verwendet wird. Ein solches Band ist z. B. in der DE 102 12 359 A1 bekannt. Die Schmalseiten des Kunststoffbandes werden mit den Glastafeln der Isolierglasscheibe verklebt, und zwar parallel zum Rand der Glastafel. Beim Verkleben des Bandes mit den Glastafeln ergibt sich eine durch die beiden Glastafeln und durch die Außenseite des Abstandhalters begrenzte, nach außen offene Randfuge, die mit einer pastösen und nachfolgend erhärtenden Versiegelungsmasse gefüllt wird. Das Band enthält ein Feuchtigkeitbindendes Material, beispielsweise auf der Basis von Zeolith, das Luftfeuchtigkeit aus dem von dem Abstandhalter und der anschließenden Versiegelungsmasse abgedichteten Innenraum der Isolierglasscheibe aufnimmt und ein Beschlagen der Isolierglasscheibe von innen verhindert.

An den Ecken einer rechteckigen Isolierglasscheibe soll das Band nach Möglichkeit rechtwinklig abgeknickt sein. Um das zu ermöglichen, ist es bekannt, aus dem Band auf seiner einen Breitseite, welche später dem Innenraum der Isolierglasscheibe zugewandt ist, eine Gehrung auszustanzen wodurch Material, welches einer rechtwinkligen Ecke des rahmenförmigen Abstandhalters hinderlich im Wege ist, entfernt wird. Die durch das Ausstanzen entstehenden, zunächst einen rechten Winkel miteinander einschließenden Schnittflächen im Band liegen nach dem Bilden der Ecke aneinander an.

Bei Isolierglasscheiben, welche nicht rechtwinklig ausgebildet sind, sondern eine oder mehrere spitzwinklige und/oder stumpfwinklige Ecken haben, ist die bekannte Stanz- oder Schneidvorrichtung unvorteilhaft, denn bei der Bildung eines spitzen Winkels muss zusätzliches Material aus dem Eckbereich des Abstandhalters verdrängt werden, wohingegen beim Bilden eines stumpfen Winkels die Schneidflächen nicht zusammentreffen, sondern eine Lücke offen lassen. Beides ist für das Erscheinungsbild des Abstandhalters in der Isolierglasscheibe und für die Abdichtung der Isolierglasscheibe ungünstig.

Es wurde schon versucht, diese Schwierigkeiten, die sich bei Modellscheiben ergeben, dadurch zu beheben, dass zwei einander überlappende Gehrungsschnitte erzeugt werden, wodurch Schnittflächen gebildet werden, die im Längsschnitt durch das Band die Gestalt eines W haben. Es ist auch bereits bekannt, anstelle eines Schnittes mit zueinander rechtwinkligen Schnittflächen eine halbzylindrische Ausnehmung in das Band zu stanzen. Die geschilderten Probleme bestehen jedoch auch dann fort.

Der Erfindung liegt die Aufgabe zugrunde, einen Weg aufzuzeigen, wie aus einem Kunststoffband ein rahmenförmiger Abstandhalter gebildet werden kann, welcher nicht nur bei rechteckigen Isolierglasscheiben, sondern auch bei Modellscheiben im Eckbereich ein gutes Erscheinungsbild hat und sich gut abdichten lässt. Unter einer Modellscheibe wird hier eine Isolierglasscheibe verstanden, die wenigstens eine Ecke hat, deren Winkel von 90° abweicht.

Diese Aufgabe wird gelöst durch eine Schneidvorrichtung mit den im Anspruch 1 angegebenen Merkmalen. Vorteilhafte Weiterbildungen der Erfindung sind Gegenstand der Unteransprüche.

Gegenstand der Erfindung ist eine Schneidvorrichtung zum Ausklinken eines Bandes aus Kunststoff, aus welchem ein rahmenförmiger Abstandhalter gebildet wird, um zwei Glastafeln einer Isolierglasscheibe auf Abstand zu halten, mit einer Führungsvorrichtung, welche das Band in dessen Längsrichtung verschieblich aufnimmt und eine Längsrichtung aufweist, in welcher es das Band beim Verschieben in der Längsrichtung führt, und mit einem Schneidwerkzeug, welches zum Ausklinken des Bandes im rechten Winkel zu der Längsrichtung verschiebbar ist.

Erfindungsgemäß hat das Schneidwerkzeug zwei Klingen, welche mit unterschiedlicher Neigung zu der Längsrichtung einstellbar ist. Durch das verstellbare Schneidwerkzeug kann der Winkel der von dem Schneidwerkzeug erzeugten Schnittfläche zu der Längsrichtung variiert werden und insbesondere zur Herstellung einer Ausklinkung für eine spitze oder stumpfe Ecke einer Modellscheibe vorteilhaft an den Innenwinkel der Ecke angepasst werden. Der Winkel der durch das Schneidwerkzeug erzeugten Ausklinkung kann insbesondere derart bestimmt werden, dass der Innenwinkel der Ausklinkung den Innenwinkel der Ecke auf 180° ergänzt, so dass die beiden die Ausklinkung begrenzenden Schnittflächen nach dem Abknicken des Bands ohne Lücke und ohne eine Verdrängung und/oder Stauchung des Materials aneinander anliegen. Durch die erfindungsgemäße Schneidvorrichtung kann daher für beliebige Modellscheiben in einer flexiblen Weise ein Abstandhalter mit guten Dichtungseigenschaften und gleichzeitig ansprechendem Erscheinungsbild hergestellt werden.

Erfindungsgemäß hat das Schneidwerkzeug zwei Klingen, die einen veränderlichen Winkel miteinander einschließen und deren Schneiden in die selbe Richtung weisen. Durch eine derartige Ausgestaltung können Taktzeitvorteile erreicht werden, da die Ausklinkung durch eine einzige geradlinige Bewegung der Schneidvorrichtung in die Richtung, welche die die Schneiden weisen, in den Abstandhalter eingearbeitet werden kann. Ein Rückstellen der Schneidvorrichtung kann beispielsweise während einer Phase erfolgen, in der das Band in der Führungsvorrichtung vorgeschoben wird.

Die Schneidvorrichtung kann zu beliebigen Ausklinkungswinkeln Schnittflächen erzeugen, die nach dem Umknicken des Bands deckungsgleich aufeinander liegen bzw. die vor dem Umknicken des Bands spiegelsymmetrisch zu einer senkrecht zu der Längsrichtung verlaufenden Spiegelebene sind, wenn der Winkel beider Klingen mit der Längsachse der Führungsvorrichtung veränderbar ist.

Eine steuerungstechnisch besonders einfache Einstellung des Winkels der beiden Klingen mit der Längsachse ist erreichbar, wenn die Klingen um eine Achse verschwenkbar sind, welche parallel zur Vorschubrichtung und damit senkrecht zur Längsachse der Führungsvorrichtung verschwenkbar sind. Dadurch kann insbesondere gewährleistet werden, dass die Fläche der Klingen bzw. Schneiden stets parallel zur Vorschubrichtung verläuft.

Besonders vorteilhaft sind Ausgestaltungen der Erfindung, in denen wenigstens eine der Schneiden die Schwenkachse der Klingen schneidet. Dadurch ist mit der Schwenkachse eine gemeinsame Gerade aller möglichen Schnittflächen erzeugbar, die insbesondere als fester Bezugspunkt für die Bestimmung von der Lage der Ausklinkung in der Längsrichtung des Bands dienen kann.

Wenn die Schwenkachse in einer Schnittlinie der beiden Schnittebenen liegt, die von der Vorschubrichtung und der Schneidkante der beiden Schneiden aufgespannt werden, ist die Lage der Spitze der von den beiden Schneiden erzeugten Ausklinkung in der Längsrichtung vollständig unabhängig von den eingestellten Winkeln der Klingen. Durch eine solche Anordnung kann ferner vermieden werden, dass eine Tiefe der Ausklinkung von dem eingestellten Winkel der beiden Klingen abhängt.

Die Schnitttiefe der beiden Schneiden ist nicht durch die jeweils andere Schneide beschränkt, wenn die beiden Klingen mit ihren Schneiden in Bezug auf die Vorschubrichtung der Klingen hintereinander angeordnet sind. Dadurch können die Schnittflächen ihre gemeinsame Schnittgerade etwas überragen, so dass sicher vermieden werden kann, dass eine Materialverbindung zwischen dem im Bereich der Ausklinkung ausgeschnittenen Keil und dem Rest des Bands stehen bleibt. Sich schneidende Schnittflächen können daher auch dann erreicht werden, wenn die Ausklinkung in einer einzigen geradlinigen Bewegung in das Band eingebracht wird.

Weitere Vorteile ergeben sich aus der folgenden Figurenbeschreibung. Die Beschreibung, die Ansprüche und die Figuren enthalten zahlreiche Merkmale in Kombination, die der Fachmann auch einzeln betrachten und zu weiteren sinnvollen Kombinationen zusammenfassen kann.

Es zeigen:
- Figur 1: eine Isolierglas-Modellscheibe mit einem rahmenförmigen Abstandhalter und zwei Glastafeln,
- Figur 2: einen Ausschnitt eines Bandes zur Bildung eines Abstandhalters und eine Schneidvorrichtung in einer Konfiguration zum Einarbeiten einer Ausklinkung für eine stumpfwinklige Ecke der Isolierglas-Modellscheibe in das Band,
- Figur 3: das Band und die Schneidvorrichtung aus Figur 2 in ihrer Arbeitsstellung,
- Figur 4: einen Ausschnitt eines Bandes zur Bildung eines Abstandhalters und die Schneidvorrichtung aus Figur 2 in einer Konfiguration zum Einarbeiten einer Ausklinkung für eine spitzwinklige Ecke der IsolierglasModellscheibe,
- Figur 5: das Band und die Schneidvorrichtung aus Figur 4 in ihrer Arbeitsstellung,
- Figur 6: eine stumpfwinklige Ausklinkung eines Bandes in einer Ansicht quer zur Längsrichtung des Bandes,
- Figur 7: die Schneidvorrichtung aus den Figuren 2 - 5 in einer Ansicht quer zur Längsrichtung des Bandes,
- Figur 8: die Schneidvorrichtung aus den Figuren 2 - 5 und 7 in einer Ansicht parallel zur Längsrichtung des Bandes,
- Figur 9: die Schneidvorrichtung aus den Figuren 2 - 5, 7 und 8 in einer Draufsicht,
- Figur 10: einen Ausschnitt eines Bandes zur Bildung eines Abstandhalters und eine alternative Schneidvorrichtung in einer Konfiguration zum Einarbeiten
- Figur 11: das Band und die Schneidvorrichtung aus Figur 10 in ihrer Arbeitsstellung,
- Figur 12: einen Ausschnitt eines Bandes und die Schneidvorrichtung in einer Konfiguration zum Einarbeiten einer Ausklinkung für eine spitzwinklige Ecke einer Isolierglas-Modellscheibe,
- Figur 13: das Band und die Schneidvorrichtung aus Figur 12 in ihrer Arbeitsstellung,
- Figur 14: die Schneidvorrichtung aus den Figuren 10 - 13 in einer Ansicht quer zur Längsrichtung des Bandes,
- Figur 15: die Schneidvorrichtung aus den Figuren 10 - 14 in einer Ansicht parallel zur Längsrichtung des Bandes,
- Figur 16: die Schneidvorrichtung aus den Figuren 10 - 15 in einer Draufsicht,
- Figur 17: ein Band mit einer von der Schneidvorrichtung aus den Figuren 10 - 16 erzeugten Ausklinkung und
- Figur 18: eine Abwandlung zur Figur 2.

In den verschiedenen Beispielen sind gleiche oder einander entsprechende Teile mit übereinstimmenden Bezugszahlen bezeichnet.

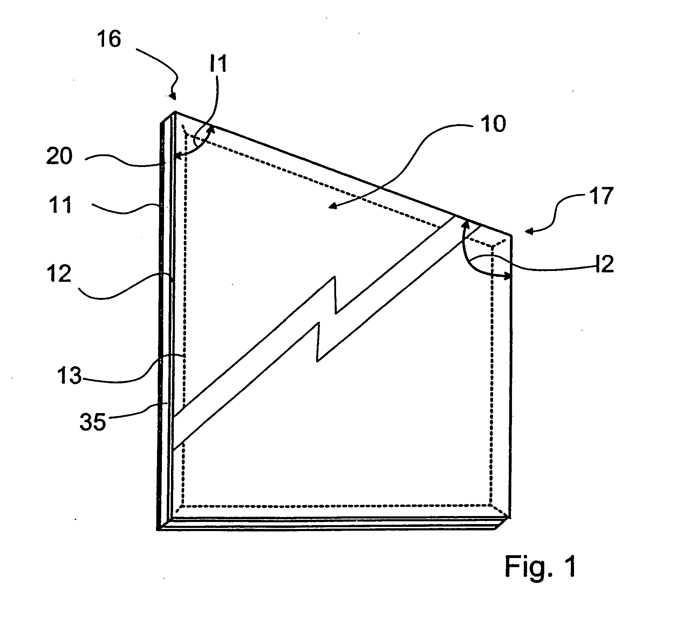

Figur 1 zeigt eine Isolierglas-Modellscheibe 10, die zwei Glastafeln 11, 12 und einen rahmenförmigen Abstandhalter 13 aus einem vorgefertigten, von der Rolle zu verarbeitenden Band 13a umfasst. Das Band 13a ist unter dem Handelsnamen SUPERSPACER bekannt und enthält ein Feuchtigkeit bindendes Mittel, z. B. auf der Basis von Zeolith. Das Abstandhaltermaterial ist aus einem dichten KunststoffSchaum gefertigt und hat ein rechteckiges Profil mit einer z. B. 10 mm breiten Breitseite 14 und mit einer z. B. 5 mm breiten Schmalseite 15, die zum Aufkleben auf die Glastafeln 11, 12 vorbereitet ist. Die Isolierglas-Modellscheibe 10 weist zwei Ecken 16, 17 auf, deren Winkel von einem rechten Winkel abweicht. Eine der Ecken 17 weist einen stumpfen Innenwinkel 12 auf, der größer als 90° ist, und eine andere Ecke 16 weist einen spitzen Innenwinkel 11 auf, der kleiner als 90° ist.

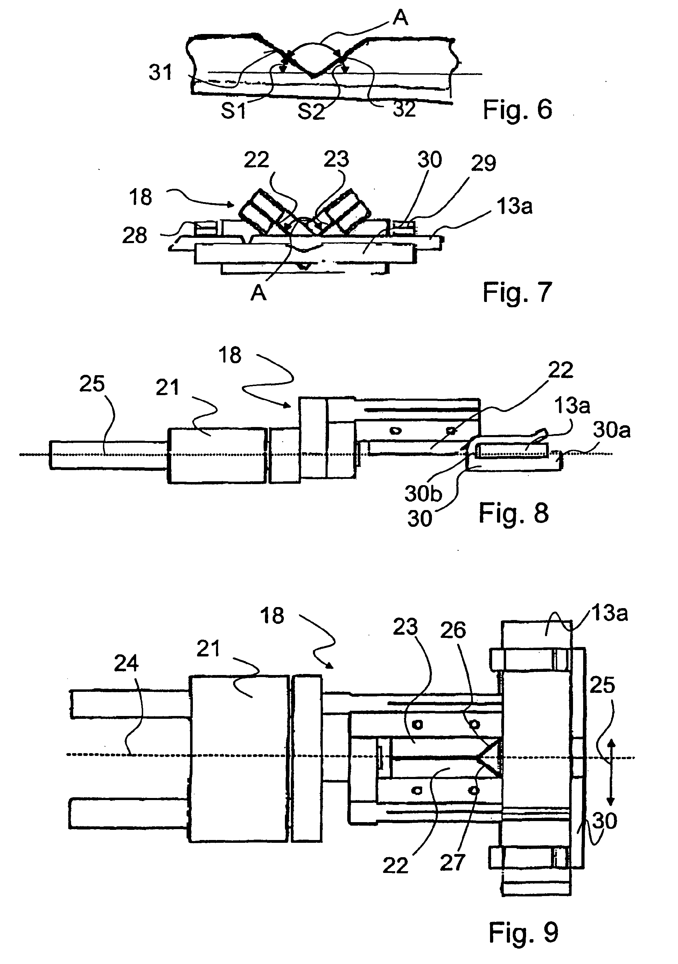

Zur Herstellung der Isolierglas-Modellscheibe 10 wird der Abstandhalter 13 zunächst in eine Führungsvorrichtung 30 eingelegt, bei welcher es sich um eine gerade Schiene mit einem Boden 30a und mit zwei zueinander parallelen, über den Boden 30a hoch stehenden Seitenwänden 30b handelt (vgl. Fig. 8), welche das Band 13a beim Verschieben führen und beim Schneiden festlegen. Die Ausklinkungen 19 werden mit einem Schneidwerkzeug 18 derart in das Band 13a eingearbeitet, dass die Abstände zwischen den Ausklinkungen 19 bis auf einen kleinen Abschlag den Kantenlängen der Glastafeln 11, 12 der Isolierglas-Modellscheibe 10 entsprechen.

Anschließend wird das derart ausgeklinkte Band 13a entlang des Randes der Glastafel 11 auf diese aufgebracht, und zwar so, dass die Ausklinkungen 19 jeweils im Bereich einer Ecke 16, 17 der Glastafel 11 angeordnet sind und dass das Band 13a im Bereich der Ausklinkungen 19 in Übereinstimmung mit dem Eckwinkel der Glastafel 11 abgewinkelt ist. Das Band 13a wird mit der Schmalseite 15 auf die erste Glastafel 11 aufgeklebt, so dass die Ausklinkungen 19 senkrecht zu der Glastafel 11 verlaufen.

Nach dem Aufbringen des Abstandhalters 13 auf die erste Glastafel 11 wird die zweite Glastafel 12a auf den Abstandhalter 13 geklebt und verpresst, so dass die beiden Glastafeln 11, 12 parallel zueinander in einem durch die Breite des Abstandhalters 13a definierten Abstand durch die Klebewirkung des Abstandhalters 13a miteinander zu einer halbfertigen Isolierglas-Modellscheibe 10 verbunden sind.

Durch den bei der Abmessung des Abstandhalters 13a berücksichtigten Abschlag verbleibt am gesamten Rand der halbfertigen Isolierglas-Modellscheibe 10a eine Randfuge 35, die durch die beiden Glastafeln 11, 12 und den Abstandhalter 13 begrenzt ist. Die Randfuge 35 wird mit einem aushärtenden Versiegelungsmaterial 20 aufgefüllt, welches einen dauerhaft festen Verbund der Glastafeln 11, 12 herstellt.

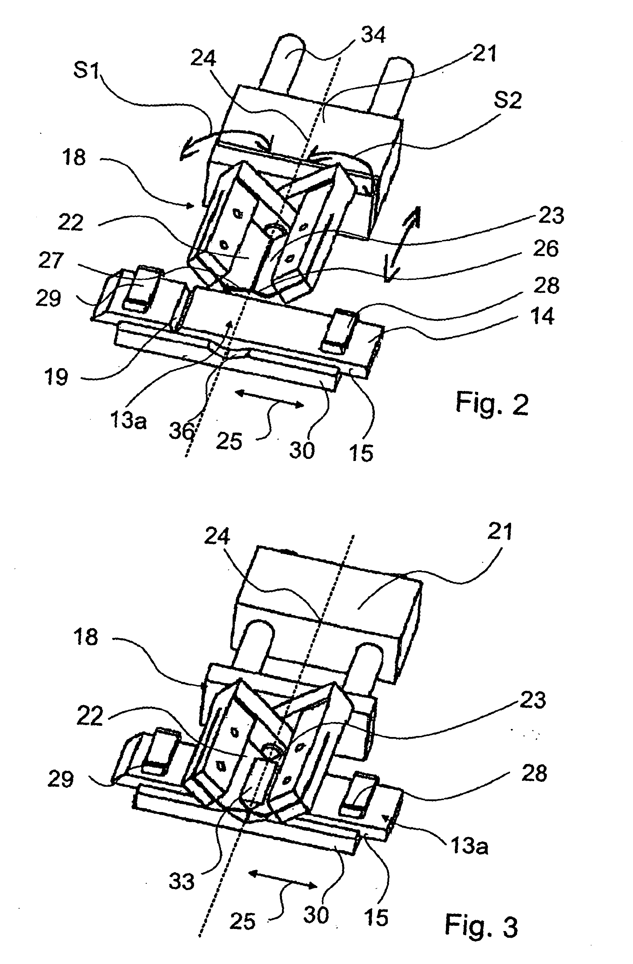

Das in den Figuren 2 - 5 und 7 - 9 dargestellte Schneidwerkzeug 18 ist von einer nicht dargestellten Recheneinheit numerisch derart gesteuert, dass immer dann, wenn eine in das Band 13a einzuarbeitende Ausklinkung 19 einen Ausklinkungswinkel A haben soll, der von dem Ausklinkungswinkel einer zuvor eingearbeiteten Ausklinkung abweicht, ein Einstellschritt durchgeführt wird. In dem Einstellschritt wird mit Hilfe eines Mittels 21 zum Verändern des Ausklinkungswinkels A der Wert des Ausklinkungswinkels A derart eingestellt, dass er den Wert des Innenwinkels I1, I2 der Ecke 16, 17 der herzustellenden Isolierglas-Modellscheibe 10 zumindest im Wesentlichen auf 180° ergänzt.

Das Mittel 21 umfasst z. B. einen Aktor und ein Getriebe zum Umsetzen einer Bewegung des Aktors in jeweils eine Schwenkbewegung zweier Klingen 22, 23. In dem Einstellschritt wird ein Schneidwinkel S1, S2 der Klingen 22, 23 durch das Mittel 21 kontinuierlich verändert. Die Klingen 22, 23 werden im Einstellschritt relativ zueinander im Ausklinkungswinkel A ausgerichtet und dienen zum Einarbeiten der Ausklinkung 19 in das Band 13a. Die Klingen 22, 23 sind um eine gemeinsame Schwenkachse 24 schwenkbar und mittels einer Welle bzw. mittels einer sie umgebenden Hohlwelle mit dem Mittel 21a verbunden.

In das Getriebe des Mittels 21 ist eine Zwangssteuerung implementiert, die gewährleistet, dass die Schneidwinkel S1, S2 der Klingen 22, 23 im Einstellschritt durch das Mittel 21 stets spiegelsymmetrisch bezüglich ihrer Winkelhalbierenden verstellt werden.

Die Klingen 22, 23 sind bevorzugt jeweils als flache Edelstahlklingen ausgebildet und stoßen mit ihren Rändern in der Flucht der Schwenkachse 24a zusammen. An ihrer Vorderkante sind die Klingen 22, 23 schräg angeschnitten und weisen an der Schräge jeweils eine scharfe Schneide 26, 27 auf. Die Schräge verläuft etwa in einem Winkel von 45° zu der Schwenkachse 24.

In einer abgewandelten Ausführungsform verlaufen die Schneiden 26, 27 rechtwinklig zur Schwenkachse 24a und damit zur Verschieberichtung der Klingen 22, 23, siehe Figur 26.

Das Band 13a ist auf der Führungsvorrichtung 30 gehalten. Es liegt mit einer seiner Breitseiten 14 auf dem Boden 30a und wird beim Ausklinken durch zwei Klammern 28, 29 flach auf dem Boden 30a der Führungsvorrichtung 30 gehalten. Ist das Band 13a auf einer seiner Breitseiten von einer oder mehreren Folien bedeckt, wie es beim Superspacer der Fall ist, dann liegt es mit dieser bedeckten Breitseite auf dem Boden 30a. Die Flucht der Schwenkachse 24 des Schneidwerkzeugs 18 verläuft rechtwinklig zu den Schmalseiten 15 durch das Band 13a.

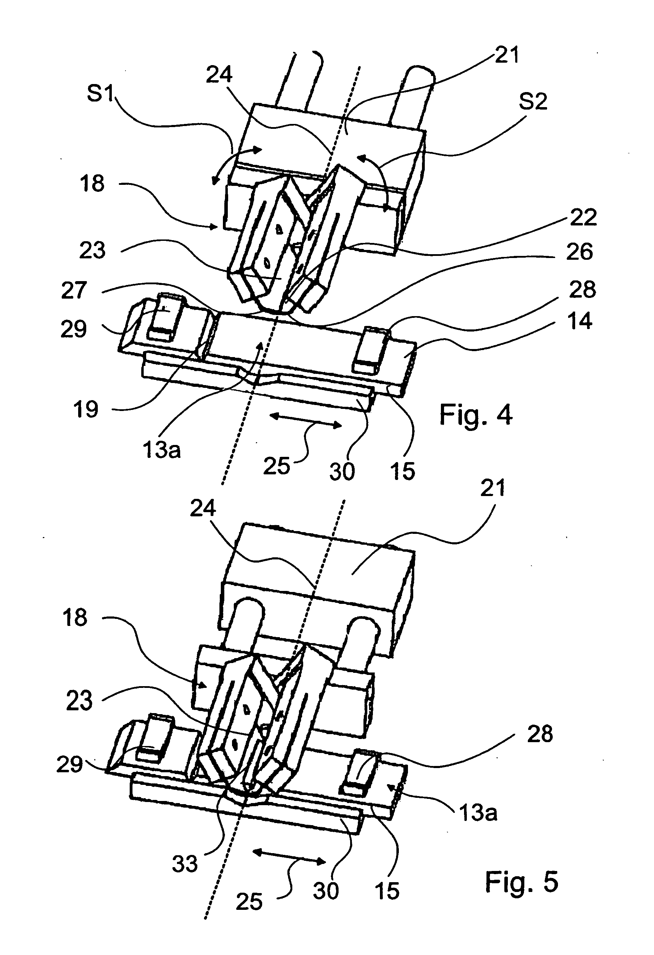

Zum Einarbeiten der Ausklinkung 19 schiebt eine Verschiebeeinrichtung 34 die beiden Klingen 22, 23 aus einer Ausgangslage (Figuren 2 und 4) parallel zu der Schwenkachse 24 in Richtung des Bandes 13a vor, so dass die Schneiden 26, 27 der Klingen 22, 23 im Bereich einer ersten Schmalseite 15 des Bandes 13a in dieses eindringen und an der gegenüberliegenden Schmalseite 15 wieder austreten (Figuren 3 und 5), ohne den Boden 30a zu berühren. Anschließend holt die Verschiebeeinrichtung 34 die Klingen 22, 23 parallel zu der Schwenkachse 24 zurück in die Ausgangslage. Dabei bleibt ein Keil aus herausgeschnittenem Material auf den Klingen 22, 23 liegen, so dass die Klingen 22, 23 nach dem Ausklinken aus der Ausklinkung 19 herausgeschnittenes Material abführen. Die Seitenwände 30b haben jeweils eine Ausnehmung 36 (Figur 2), in welche die Klingen 22, 23 geschoben werden. Über die Führungsvorrichtung 30 hinweg kann das Band 13a bis zu einer Stelle bewegt werden, in der eine weitere Ausklinkung 19 in das Band 13a eingearbeitet werden soll.

Da die Schneiden 26, 27 der Klingen 22, 23 bis zu der Schwenkachse 24 reichen, erzeugen die beiden Klingen 22, 23 jeweils eine bis zu der Schwenkachse 24 reichende Schnittfläche 31, 32 in dem Band 13a.

Figur 6 zeigt das Profil der fertigen Ausklinkung 19 für den Fall einer spitzwinkligen Ecke 16 der Isolierglas-Modellscheibe 10. Die Schnittflächen 31, 32, welche die Ausklinkung 19 bilden, sind eben und stoßen in der Schwenkachse 24 des Schneidwerkzeugs 18 aneinander.

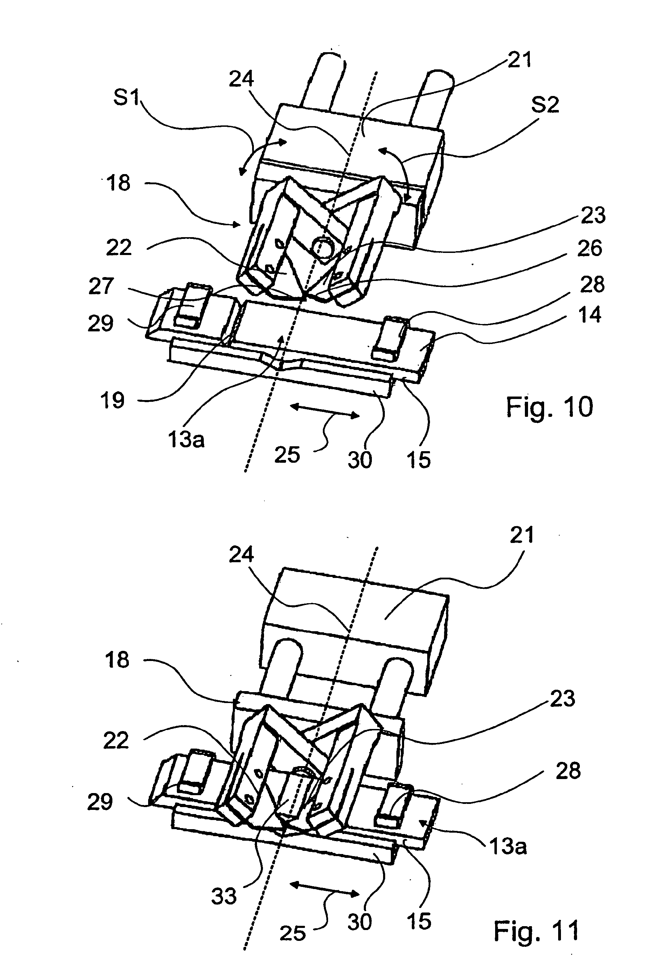

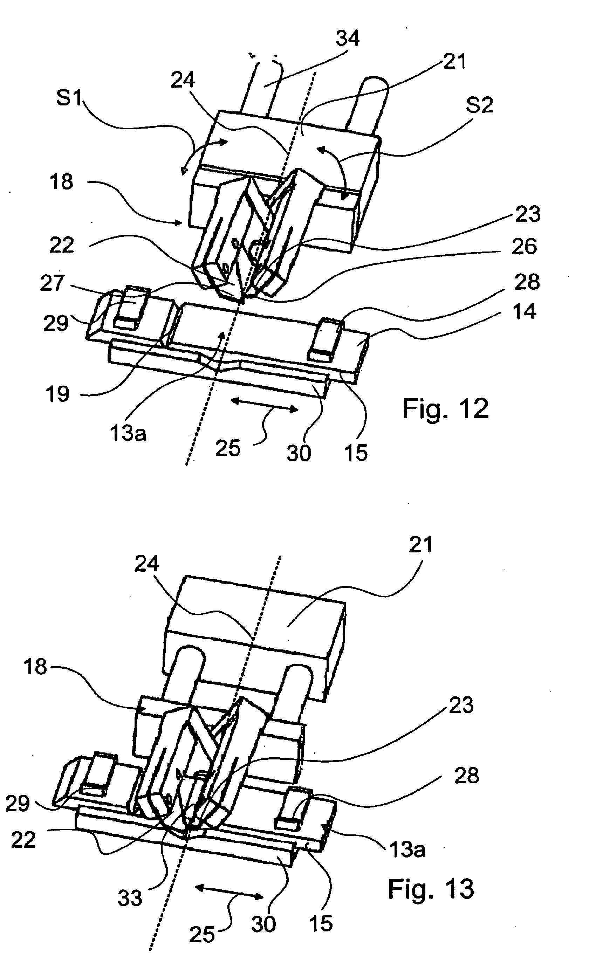

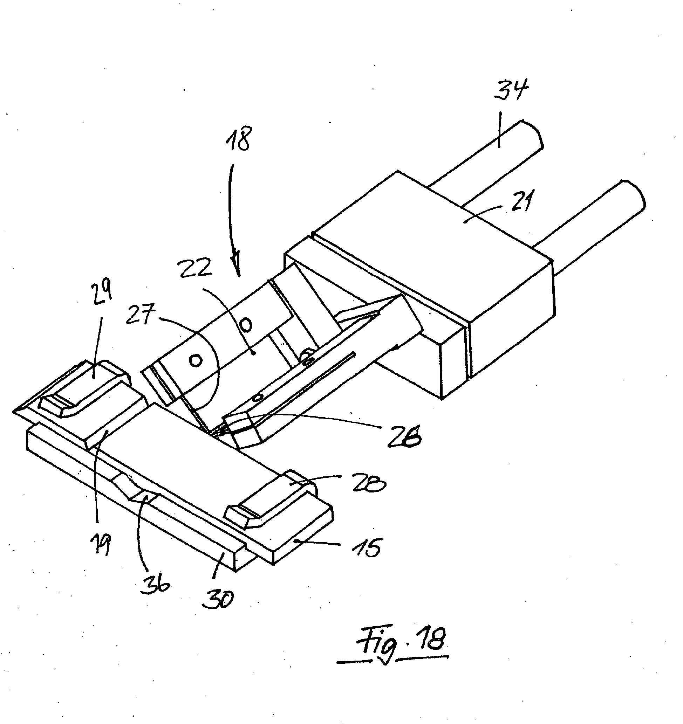

Die Figuren 10 bis 25 zeigen alternative Ausgestaltungen der Erfindung. Die folgende Beschreibung geht im Wesentlichen auf Unterschiede zu dem in den Figuren 2 - 9 dargestellten Ausführungsbeispiel ein. Im Hinblick auf gleich bleibende Merkmale wird auf die Beschreibung zu den Figuren 1 - 9 verwiesen. Analoge Merkmale sind mit gleichen Bezugszeichen versehen.

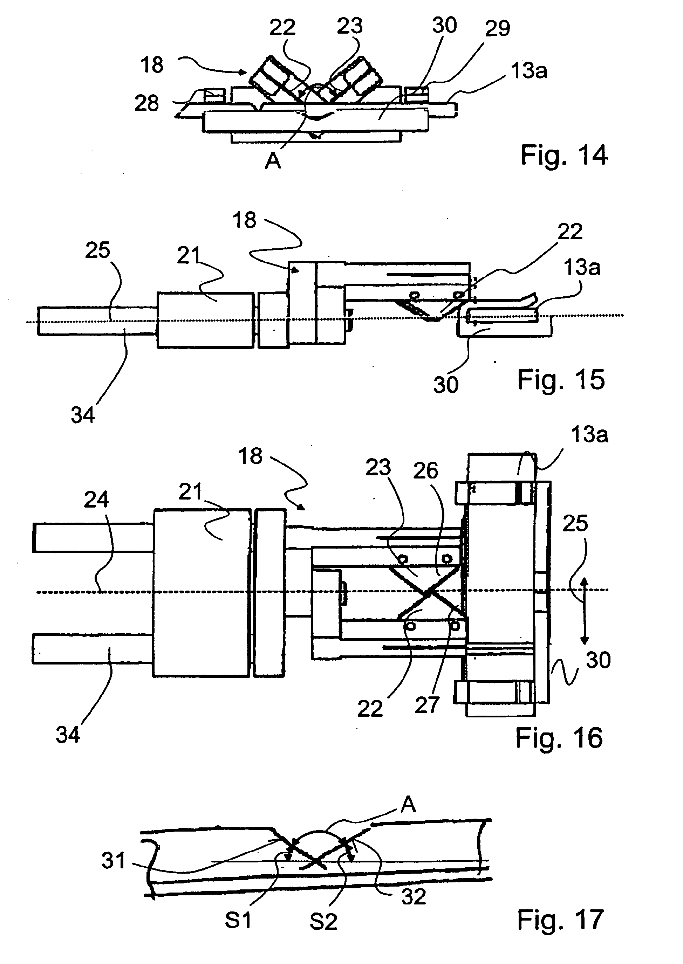

Das in den Figuren 10 - 17 dargestellte Schneidwerkzeug 18 unterscheidet sich von dem in den Figuren 2 - 9 dargestellten Schneidwerkzeug 18 nur durch die Form der Klingen 22, 23. Die Klingen 22, 23 weisen jeweils eine Spitze auf, die über eine gemeinsame Schwenkachse 24 der Klingen 22, 23 hinaus reicht. Die Klingen 22, 23 erzeugen daher jeweils eine bis über die Schwenkachse 24 hinaus reichende Schnittfläche 31, 32 in dem Band 13a, so dass die Schwenkachse 24 innerhalb der beiden Schnittflächen 31, 32 liegt (Figur 17). Die von den Klingen 22, 23 erzeugten Schnittflächen 31, 32 durchdringen einander. Dadurch wird ein einfaches Ablösen eines herausgeschnittenen Keils 33 gewährleistet. Die Spitzen der Klingen 22, 23 sind in der Richtung der Schwenkachse 24 versetzt hintereinander angeordnet.

### Bezugszeichenliste

- 10: Isolierglas-Modellscheibe
- 11: Glastafel
- 12: Glastafel
- 13: Abstandhalter
- 14: Breitseite
- 15: Schmalseite
- 16: Ecke
- 17: Ecke
- 18: Schneidwerkzeug
- 19: Ausklinkung
- 20: Versiegelungsmaterial
- 21: Mittel
- 22: Klinge
- 23: Klinge
- 24: Schwenkachse
- 25: Längsrichtung
- 26: Schneide
- 27: Schneide
- 28: Klammer
- 29: Klammer
- 30: Führungsvorrichtung
- 31: Schnittfläche
- 32: Schnittfläche
- 33: Keil
- 34: Verschiebeeinrichtung
- 35: Randfuge
- 36: Ausnehmung
- A: Ausklinkungswinkel
- S1: Schneidwinkel
- S2: Schneidwinkel

## Patentansprüche

1. Schneidvorrichtung zum Ausklinken eines Werkstücks (13a), welches eine Längsrichtung (25) aufweist, mit einer Führungsvorrichtung (30), welche das Werkstück (13a) in dessen Längsrichtung (25) verschieblich aufnimmt und eine Längsrichtung (25) aufweist, in welcher es das Werkstück (13a) beim Verschieben in der Längsrichtung (25) führt,
und mit einem Schneidwerkzeug (18), welches zum Ausklinken des Werkstücks (13a) im rechten Winkel zu der Längsrichtung (25) verschiebbar ist und zwei Klingen (22, 23) hat, welche mit unterschiedlicher Neigung zu der Längsrichtung (25) einstellbar sind, **dadurch gekennzeichnet, dass** das Werkstück (13a) ein Band aus Kunststoff ist, aus welchem ein rahmenförmiger Abstandhalter (13) gebildet wird, um zwei Glastafeln (11, 12) einer Isolierglasscheibe (10) auf Abstand zu halten,
und dass das Schneidwerkzeug (18) von einer Recheneinheit numerisch derart gesteuert ist, dass immer dann, wenn eine in das Band (13a) einzuarbeitende Ausklinkung (19) einen Ausklinkungswinkel (A) haben soll, der von dem Ausklinkungswinkel der zuvor eingearbeiteten Ausklinkung abweicht, ein Einstellschritt durchgeführt wird, wozu die Klingen (22, 23) um eine Achse verschwenkbar sind, welche parallel zur Vorschubrichtung des Schneidwerkzeugs (18) verläuft, und durch eine Zwangssteuerung stets spiegelsymmetrisch bezüglich ihrer Winkelhalbierenden verstellt werden.

2. Schneidvorrichtung nach Anspruch 1, **dadurch gekennzeichnet, dass** die Schneiden (26, 27) der zwei Klingen (22, 23) in die selbe Richtung weisen.

3. Schneidvorrichtung nach Anspruch 2, **dadurch gekennzeichnet, dass** der Winkel beider Klingen (22, 23) mit der Längsachse (25) der Führungsvorrichtung (30) veränderbar ist.

4. Schneidvorrichtung nach einem der vorstehenden Ansprüche, **dadurch gekennzeichnet, dass** wenigstens eine der Schneiden (26, 27) die Schwenkachse (24) der Klingen (22, 23) schneidet.

5. Schneidvorrichtung nach einem der Ansprüche 2-4, **dadurch gekennzeichnet, dass** die beiden Klingen (22, 23) mit ihren Schneiden (26, 27) in Bezug auf die Vorschubrichtung der Klingen (22, 23) hintereinander angeordnet sind.

6. Schneidvorrichtung nach einem der vorstehenden Ansprüche, **dadurch gekennzeichnet, dass** die wenigstens eine Klinge (22, 23) eine Schneide (26, 27) hat, welche schräg zu der Verschieberichtung der Klinge (22, 23) verläuft, vorzugsweise unter einem Winkel von ungefähr 45°.

7. Schneidvorrichtung nach einem der Ansprüche 1 bis 5, **dadurch gekennzeichnet, dass** die wenigstens eine Klinge (22, 23) eine Schneide (26, 27) hat, welche rechtwinklig zu der Verschieberichtung der Klinge (22, 23) verläuft.

## Claims

1. Cutting device for notching a work piece (13a) that has a longitudinal direction (25), having a guide mechanism (30) which supports the work piece (13a) for displacement in its longitudinal direction (25) and which has a longitudinal direction (25) in which it guides the work piece (13a) as it is displaced in the longitudinal direction (25),
and having a cutting tool (18) which can be displaced at a right angle relative to the longitudinal direction (25) for notching the work piece (13) and which comprises two blades (22, 23) adapted for being adjusted to positions differently inclined to the longitudinal direction (25), **characterized in that** the work piece (13a) is a plastic strip from which a frame-like spacer (13) is formed for keeping two glass panels (11, 12) of an insulating glass pane (10) at a spacing one from the other,
and that the cutting tool (18) is numerically controlled by a computer unit in a manner such that every time a notch (19) produced in the strip (13a) is to have a notch angle (A) differing from the notch angle of the notch produced before, an adjusting step is carried out for which purpose the blades (22, 23) are pivotable about an axis that extends in parallel to the feed direction of the cutting tool (18), being at any time adjusted mirror-symmetrically relative to their angle bisector by a forced control mechanism.

2. The cutting device as defined in Claim 1, **characterized in that** the cutting edges (26, 27) of the two blades (22, 23) point to the same direction.

3. The cutting device as defined in Claim 2, **characterized in that** the angle of the two blades (22, 23) can be varied together with the longitudinal axis (25) of the guide mechanism (30).

4. The cutting device as defined in any of the preceding claims, **characterized in that** at least one of the blades (26, 27) intersects the pivot axis (24) of the blades (22, 23).

5. The cutting device as defined in any of Claims 2 to 4, **characterized in that** the cutting edges (26, 27) of the two blades (22, 23) are arranged one behind the other relative to the feed direction of the blades (22, 23).

6. The cutting device as defined in any of the preceding claims, **characterized in that** the at least one blade (22, 23) has a cutting edge (26, 27) that extends obliquely relative to the direction of displacement of the blade (22, 23), preferably at an angle of approximately 45°.

7. The cutting device as defined in any of Claims 1 to 5, **characterized in that** the at least one blade (22, 23) has a cutting edge (26, 27) that extends at a right angle to the direction of displacement of the blade (22, 23).

## Revendications

1. Dispositif de découpage pour l'encochage d'une pièce à usiner (13a) qui présente une direction longitudinale (25), comprenant un dispositif de guidage (30) dans lequel vient se loger la pièce à usiner (13a) en mobilité dans sa direction longitudinale (25) et qui présente une direction longitudinale (25) dans laquelle le dispositif de guidage guide la pièce à usiner (13a) lors de son déplacement dans la direction longitudinale (25), et comprenant un outil de coupe (18) qui est à même de se déplacer pour l'encochage de la pièce à usiner (13a) à angle droit par rapport à la direction longitudinale (25) et qui possède deux lames (22, 23) qui peuvent être réglées avec une inclinaison différente par rapport à la direction longitudinale (25), **caractérisé en ce que** la pièce à usiner (13a) représente une bande en matière synthétique à partir de laquelle on forme un espaceur (13) en forme de cadre, pour maintenir à distance l'un de l'autre deux pans de verre (11, 12) d'une vitre isolante (10),
et **en ce que** l'outil de coupe (18) est commandé numériquement par un ordinateur de telle sorte que, chaque fois qu'un encochage (19) qui doit être pratiqué dans la bande (13a) doit former un angle d'encochage (A) qui s'écarte de l'angle formé par l'encochage pratiqué antérieurement, on passe par une étape de réglage pour laquelle les lames (22, 23) sont à même de pivoter autour d'un axe, qui s'étend parallèlement à la direction d'avance de l'outil de coupe (18), et se déplacent via une commande forcée toujours en symétrie spéculaire par rapport à leurs bissectrices.

2. Dispositif de découpage selon la revendication 1, **caractérisé en ce que** les tranchants (26, 27) des deux lames (22, 23) sont orientés dans la même direction.

3. Dispositif de découpage selon la revendication 2, **caractérisé en ce que** l'angle formé par les deux lames (22, 23) avec l'axe longitudinal (25) du dispositif de guidage (30) est variable.

4. Dispositif de découpage selon l'une quelconque des revendications précédentes, **caractérisé en ce qu'**au moins un des tranchants (26, 27) coupe l'axe de pivotement (24) des lames (22, 23).

5. Dispositif de découpage selon l'une quelconque des revendications 2-4, **caractérisé en ce que** les deux lames (22, 23) sont disposées avec leurs tranchants (26, 27) l'une derrière l'autre par rapport à la direction d'avance des lames (22, 23).

6. Dispositif de découpage selon l'une quelconque des revendications précédentes, **caractérisé en ce que** ladite au moins une lame (22, 23) possède un tranchant (26, 27) qui s'étend en inclinaison par rapport à la direction de déplacement des lames (22, 23), de préférence en formant un angle d'environ 45°.

7. Dispositif de découpage selon l'une quelconque des revendications 1 à 5, **caractérisé en ce que** ladite au moins une lame (22, 23) possède un tranchant (26, 27) qui s'étend à angle droit par rapport à la direction de déplacement des lames (22, 23).
